# EUROPÄISCHE PATENTSCHRIFT

(11) **EP 1 515 074 B1**
(45) Veröffentlichungstag und Bekanntmachung des Hinweises auf die Patenterteilung: **15.03.2006**
(21) Anmeldenummer: 04020010.7
(22) Anmeldetag: 24.08.2004
(51) Int. Cl.: F16L 3/10

(54) **Verbindungsvorrichtung von zwei Flanschteilen**
Connecting device of two flange portions
Dispositif de raccordement de deux pièces de bride

(30) Priorität: 09.09.2003 DE 10341882
(43) Veröffentlichungstag der Anmeldung: 16.03.2005
(73) Patentinhaber: Mefa Befestigungs- und Montagesysteme GmbH, 74635 Kupferzell (DE)
(72) Erfinder: Schneider, Martin, 74613 Öhringen (DE)
(74) Vertreter: Schuster, Müller & Partner

(56) Entgegenhaltungen:
- EP-A- 0 225 515
- EP-A- 0 703 394
- EP-A- 1 050 704
- DE-U- 29 704 780

## Beschreibung

Die Erfindung geht aus von einer Verbindungsvorrichtung von zwei Flanschteilen, insbesondere den zwei einander zugeordneten Laschen einer Rohrschelle nach der Gattung des Hauptanspruchs.

Wenn zwei Flanschteile in schlecht zugänglichen Bereichen miteinander verbunden werden sollen, stellt dieses häufig ein erhebliches Problem dar. Entweder bestehen Probleme, die Gewindemutter in eine Lage zu bringen, in der die Gewindeschraube etwa achsgleich zuführbar ist, um dann eingeschraubt werden zu können oder es bestehen Probleme, die Gewindemutter gegen Verdrehen zu sichern bzw. es bestehen Probleme des Zugangs eines Werkzeuges zur Gewindemutter oder Gewindeschraube. Dieses notwendige Fluchten von Gewindemutter und Gewindeschraube hängt natürlich von der Lage der Flanschteile zueinander ab, wobei besonders bei Rohrschellen ein Teil der Rohrschelle durch dessen Anbindung an eine Wand oder dergleichen in seiner Lage vorbestimmt ist und das andere Teil dem bereits montierten Teil angepasst werden muss, was zu den oben genannten Schwierigkeiten führen kann.

Bei einer Verbindungsvorrichtung von zwei Flanschteilen der gattungsgemäßen Art (DE PS 3804940) werden zur Anpassung zusätzliche Winkelstücke eingesetzt, mit denen eines der Rohrschellenteile befestigbar ist, während das andere Teil über Gewindeschrauben, die durch Öffnungen der Laschen greifen, und Gewindemuttern mit dem einen Teil befestigbar ist. Es handelt sich um eine recht aufwendige Konstruktion bei der die Befestigung der Rohrschelle am Rohr getrennt von den Rohrschellenteilen erfolgt, bei denen aber diese Befestigung unter Nutzung von Gewindeschraube und Gewindemutter, die unmittelbar mit der Rohrschelle zusammenwirken, erfolgt. Diese getrennte Aufhängung ist umständlich und bezüglich der Zugänglichkeit ungünstig.

Bei einer anderen bekannten Verbindungsvorrichtung von zwei Flanschteilen in Form einer Rohrschelle (DE PS 3621484) ist diese pendelnd aufgehängt, um so Probleme der Einbaulage zu lösen. Hierbei wird zwar ein Schwenken der Rohrschelle insgesamt erzielt, nicht jedoch das spezielle Problem des Zusammenschraubens von die Flaschen zusammenhaltenden Gewindeschraube und Gewindemutter, was hier in der üblichen Art gelöst ist.

Zur Umgehung des Problems des Anbringens eines Teils der Rohrschelle an ein anderes, bereits befestigtes Teil, ist es bekannt, das eine Teil schwenkbar zu machen um nach Einlegen des Rohres oder dergleichen dieses durch Schwenken des Teiles in seine Einbaulage zubringen, um in dieser verschraubt zu werden. Bei einer derartigen bekannten Lösung (DE OS 4213864) wird die Gewindeschraube nach Einschwenken eingeführt und festgeschraubt. Bei einer anderen bekannten ähnlichen Lösung (DE PS 4431692) wird die teilweise voreingeschraubte Gewindeschraube nach Montage eingeschwenkt und dann festgeschraubt, wofür die Laschenpaare der nicht befestigten Rohrschellenhälfte einerseits ein Langloch und andererseits eine seitlich offene Öffnung aufweisen, über die die Gewindeschrauben einerseits durchgeführt und andererseits eingeschwenkt werden können, bevor sie dann jeweils festgeschraubt werden. Zwar wird hierdurch das Suchen und Finden des hier als Gewindemutter dienenden schwenkbaren Blechschenkels vereinfacht, allerdings nur auf Kosten der hier gegebenen Schwenkbarkeit der Gewindeschraube und der verringerten Festigkeit durch die gegebene seitliche unbegrenzte Öffnung..

In der Gebrauchsmusterschrift DE 297 04 780 wird eine Rohrschelle beschrieben, die aus Schellenschenkeln besteht und deren durch zwei Laschen gebildeten Öffnung mittels einer Schraube verschließbar ist. Dabei greift die Schraube in ein Einschraubteil ein, wobei das Einschraubteil derart ausgebildet ist, dass die Schraube in als Gewinde dienende radial ausweichbare Zungen eindrückbar ist. Nachteilig ist hierbei der zum Eindrücken zusätzlich erforderliche Kraftaufwand.

Bei einer anderen bekannten, gattungsbildenden Verbindungsvorrichtung von zwei Flanschteilen in Form einer Rohrschelle (EP-A-0 703 394) weist der ringförmige, mittels einer Schließschraube verschließbaren Schellenkörper ein erstes und ein zweites Ende auf. Hierbei wird die Schließschraube in eine Nutmutter, die zwei gegenüberliegende Führungsnuten aufweist und im Bereich des zweiten Endes des Schellenkörpers einschiebbar angeordnet ist, eingeschraubt. Nachteilig ist hierbei, dass, um die Nutmutter am zweiten Ende des Schellenkörpers zu montieren, an diesem eine Erweiterung vorgesehen sein muß.

### Die Erfindung und ihre Vorteile

Die erfindungsgemäße Verbindungsvorrichtung mit dem kennzeichnenden Merkmal des Hauptanspruchs hat demgegenüber den Vorteil, dass die Gewindemutter in der Öffnung der Lasche verdrehgesichert gelagert, in Längsrichtung des Langloches verschiebbar und, vor allem aufgrund der Langlochausführung, pendelbar angeordnet ist. Hierdurch ist es verhältnismäßig einfach, die Gewindeschraube und Gewindemutter achsgleich zu bekommen, um sie danach miteinander zu verschrauben. Die Gewindemutter weist eine radiale Abflachung auf, die ein direktes Einsetzen der Gewindemutter in die Öffnung der Lasche erlaubt. Dadurch wird die Montage wesentlich vereinfacht. Nicht zuletzt ist diese Ausführung außerordentlich preiswert und sehr stabil.

Nach einer vorteilhaften Ausgestaltung der Erfindung weist die Gewindemutter für das axiale Zusammenwirken eine sich an der Außenfläche der zweiten Lasche abstützende Abstufung auf. Hierbei kann es sich um eine Abdrehung handeln aber auch nur um die Begrenzung der in der Mantelfläche der an sich zylindrisch ausgebildeten Gewindemutter vorhandenen Abflachung.

Nach einer zusätzlichen vorteilhaften Ausgestaltung der Erfindung ist das Gewinde in der Gewindemutter von der Seite der Gewindeschraube her zurückgesetzt, beispielsweise in Art eines Absatzes in der Gewindebohrung. Dies hat den Vorteil, dass die Gewindeschraube in den gewindefreien Teil der Gewindemutter einschiebbar ist, wodurch die Achsgleichheit erreicht wird und wonach dann die Gewindeschraube in das Gewinde der Gewindemutter eingeschraubt wird. Diese Konstruktion ist deshalb möglich, weil aufgrund der Anordnung der Gewindemutter in der Öffnung der Lasche die Gewindemutter verhältnismäßig dick ausgeführt werden kann, so dass ein Teil dieser Dicke für das Gewinde und ein anderer Teil für eine solche Einführbohrung dienen kann.

Nach einer zusätzlichen vorteilhaften Ausgestaltung der Erfindung ist in beiden Laschen die Öffnung als Langloch ausgebildet. Der hierdurch gegebene Vorteil ist offensichtlich, da ähnlich wie beim Stand der Technik die eine Seite der Rohrschellenteile vormontierbar ist und dann nach seitlichem Einschieben des Rohres die zweite Verbindung hergestellt werden kann.

Nach einer zusätzlichen vorteilhaften Ausgestaltung der Erfindung ist die Gewindemutter gegen axiales Herausfallen aus der Öffnung gesichert. Eine solche Sicherung kann in unterschiedlichster Art geschehen, beispielsweise auch als Schnappverbindung. Maßgebend ist, dass die radiale Verschiebbarkeit der Gewindemutter im Langloch erhalten bleibt, sowie die Pendelfähigkeit der Gewindeschraube.

Weitere Vorteile und vorteilhafte Ausgestaltungen der Erfindung sind der nachfolgenden Beschreibung der Zeichnung und den Ansprüchen entnehmbar.

### Zeichnung

Ein Ausführungsbeispiel des Gegenstandes der Erfindung ist in der Zeichnung dargestellt und im folgenden näher beschrieben. Es zeigen:
- Figur 1: eine erfindungsgemäße Rohrschelle in perspektivischer Ansicht;
- Figur 2: die Rohrschelle aus Figur 1 in Montagezustand;
- Figur 3: Ausschnitte aus Figur 2 in vergrößertem Maßstab und einem Schnitt entsprechend der Linie III - III in Figur 4;
- Figur 4: eine Draufsicht auf die Rohrschelle entsprechend dem Pfeil IV in Figur 2;
- Figur 5: eine Seitenansicht der Rohrschelle in fertig montiertem Zustand ;
- Figur 6: eine Draufsicht auf die Rohrschelle entsprechend dem Pfeil VI in Figur 5;
- Figur 7: einen Schnitt in vergrößertem Maßstab entsprechend den Linien VII - VII in Figur 6 und
- Figur 8: einen Schnitt entsprechend der Linie VIII - VIII in Figur 5.

Für die Darstellungen wurden zum Teil unterschiedliche Maßstäbe gewählt.

### Beschreibung des Ausführungsbeispiels

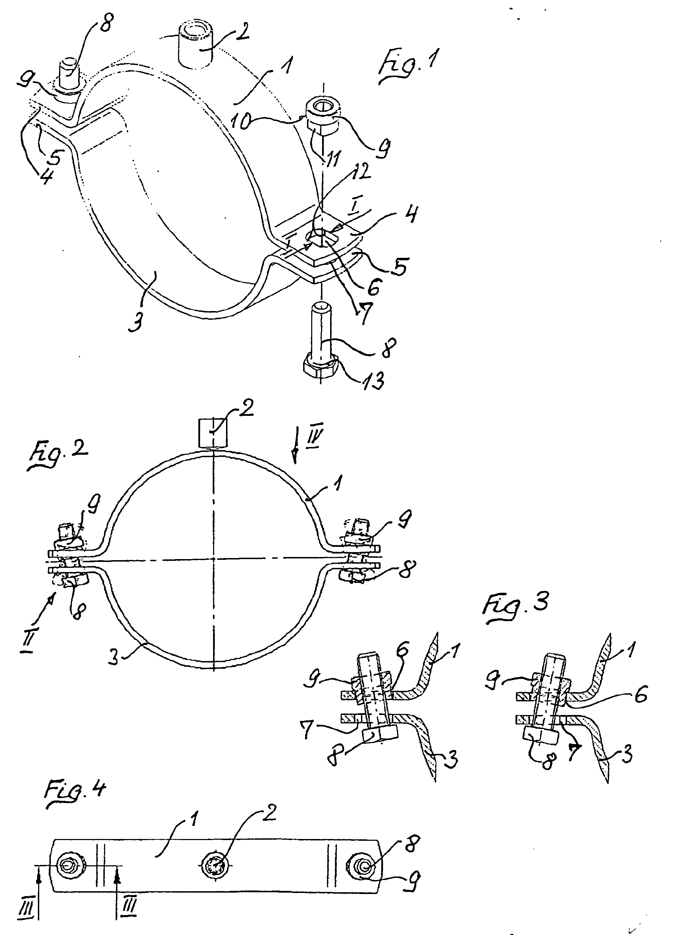

In Figur 1 ist die erfindungsgemäße Rohrschelle in perspektivischer Ansicht dargestellt, mit einer oberen Schellenhälfte 1, die über ein Schraubteil 2 an einer Wand oder dergleichen befestigbar ist, und mit einer unteren Schellenhälfte 3, die den zu halternden Gegenstand untergreift. Die beiden Schellenhälften weisen jeweils gegenüberliegende Laschen 4 und 5 auf. In den Laschen 4 und 5 sind Öffnungen 6 und 7 angeordnet, die einerseits, nämlich der Öffnung 7 der ersten Lasche 5, von einer Gewindeschraube 8 und andererseits, nämlich der Öffnung 6 in der zweiten Lasche 4, von einer Gewindemutter 9 durchdrungen sind. In Figur 1 sind die Gewindeschraube 8 und die Gewindemutter 9 in der rechten Hälfte der Figur in Explosionsdarstellung, in der linken Hälfte in fest montiertem Zustand gezeigt.

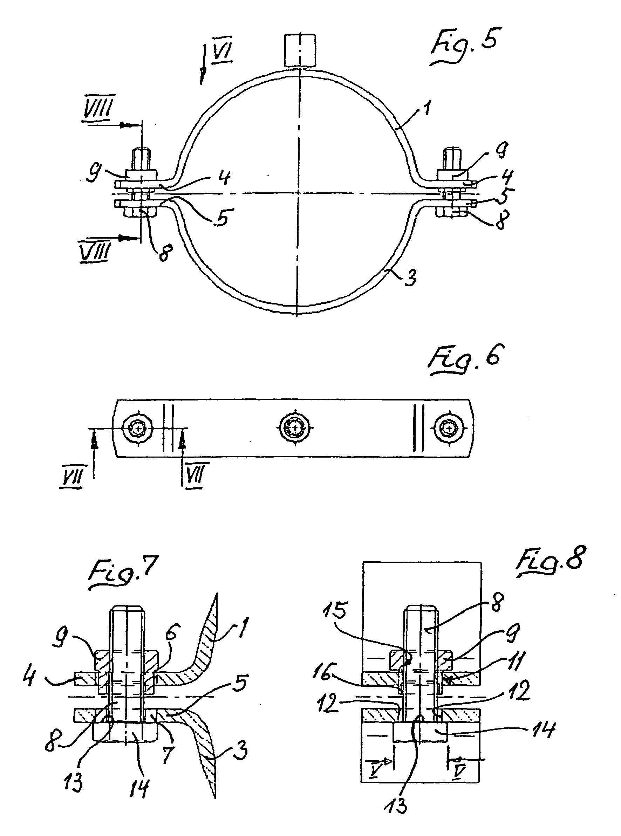

Erfindungsgemäß ist die Gewindemutter 9 aus einem zylindrischen Teil mit zwei Durchmessern hergestellt, wodurch eine Stufe 10 entsteht. Der Abschnitt der Gewindemutter 9 des kleineren Durchmessers weist außerdem zwei radiale Abflachungen 11 auf (siehe hierzu Fig. 7 und Fig. 8).

Die Öffnung 6 ist als Langloch ausgebildet, in das die Gewindemutter 9 mit dem Abschnitt kleineren Durchmessers steckbar ist, wobei der Abstand I-I der seitlichen Langlochflächen 12 der Schlüsselweite der Abflachungen 11 an der Gewindemutter 9 entspricht. Auch die Öffnung 7 ist als Langloch ausgebildet, um der Gewindeschraube 8 eine Pendelbewegung zu ermöglichen. Beim Zusammenschrauben stützt sich dann die Kopfringfläche 13 an der unteren Seite der Lasche 5 ab. In jedem Fall ist die Länge der als Langloch ausgebildeten Öffnung 6 so groß, dass auch die Gewindemutter 9 entsprechend im Langloch 6 verschiebbar ist und insbesondere mit der Gewindeschraube 8 eine Pendelbewegung vollziehen kann, wobei sich in verschraubtem Zustand die Stufe 10 an der Oberseite der Lasche 4 abstützt.

In Figur 2 ist gezeigt, wie eine solche Pendelbewegung der Gewindeschraube 8 und Gewindemutter 9 nach rechts oder links aussehen kann. Entscheidend ist hierbei, dass es relativ einfach ist, durch die Möglichkeit des Pendelns von Gewindemutter 9 oder Gewindeschraube 8 eine Vormontage vorzunehmen in der die beiden Schellenhälften relativ leicht miteinander verbindbar sind, auch an unzugänglichen Stellen. Bei Figur 2 handelt es sich um einen gegenüber Figur 1 verkleinerten Maßstab.

In Figur 3 ist diese Pendelmöglichkeit von Gewindeschraube 8 und Gewindemutter 9 innerhalb des Langloches 6 bzw. 7 zur Verdeutlichung in vergrößertem Maßstab dargestellt. Sie zeigt jeweils die linke Schraube entsprechend dem Pfeil II, einmal nach links geschwenkt und dann rechts in Figur 3 nach rechts geschwenkt. Diese Schwenkungsmöglichkeit ist willkürlich und dient zur Vereinfachung der Vormontage.

Figur 4 zeigt eine, Draufsicht auf die Rohrschelle entsprechend dem Pfeil IV in Figur 2.

In Figur 5 ist die Rohrschelle fertig verschraubt dargestellt. Die obere Schellenhälfte 1 ist mit der unteren Schellenhälfte 3 über die Gewindeschrauben 8 und die Gewindemuttern 9 fest miteinander verbunden, wobei das hier nicht dargestellte Rohr eingespannt ist. Durch das Zusammenziehen gelangen Schraube und Mutter aus einer möglichen Pendel- bzw. Schräglage in die dargestellte senkrechte Stellung. Hierdurch ist auch eine gute Auflage zu den Laschen 4 und 5 gewährleistet.

Figur 6 zeigt eine Draufsicht auf die Rohrschelle entsprechend dem Pfeil VI in Figur 5.

In Figur 7 und Figur 8 ist die erfindungsgemäße Verschraubung im Schnitt und im vergrößerten Maßstab entsprechend der endgültigen Einbaulage aus Figur 5 und 6 dargestellt. Wie Figur 7 entnehmbar, weisen die Langlöcher 6 und 7 die gleiche Länge auf und wie hier nicht erkennbar, auch die gleiche Breite. Hierdurch ist auch die Möglichkeit gegeben, die Gewindemutter 9 von unten her einzusetzen und die Gewindeschraube 8 von oben. Dies kann in manchen Montagesituationen von Vorteil sein. In jedem Fall ist die Kopfringfläche 13 des Schraubenkopfes 14 groß genug, um nicht in die Öffnung 7 zu tauchen, sondern eine gute Auflage auf der Lasche 5 bzw. 4 zu bilden.

Dies ist besonders gut in Figur 8 erkennbar, in der die durch die Langlochflächen 12 gegebene Breite des Langlochs immer noch schmäler ist als die Schlüsselweite V - V des Schraubenkopfes 14. Die Gewindemutter 9 ist aufgrund ihrer Abflachungen 11 innerhalb des Langloches gut gegen sich Verdrehen gesichert.

Die Gewindemutter 9 weist bei ihrer Gewindebohrung 15 einen erweiterten Abschnitt 16 auf, in den die Gewindeschraube 8 steckbar ist, bevor sie beim Verdrehen dann in das Gewinde eingreift. Hierdurch wird das Blindsuchen der Gewindebohrung 15 durch die Gewindeschraube 8 stark vereinfacht, da gleichzeitig mit dem Einstecken des vorderen Abschnittes der Gewindeschraube 8 in diesen erweiterten Abschnitt 16 eine achsgleiche Einstellung zwischen Schraube und Mutter erzielt wird.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1.: Obere Schellenhälfte
- 2.: Schraubteil
- 3.: untere Schellenhälfte
- 4.: Lasche (zweite)
- 5.: Lasche (erste)
- 6.: Öffnung/Langloch
- 7.: Öffnung/ Langloch
- 8.: Gewindeschraube
- 9.: Gewindemutter
- 10.: Stufe
- 11.: Abflachungen
- 12.: Langlochfläche
- 13.: Kopfringfläche
- 14.: Schraubenkopf
- 15.: Gewindebohrung
- 16.: erweiterter Abschnitt

## Patentansprüche

1. Verbindungsvorrichtung von zwei Flanschteilen, insbesondere den zwei einander zugeordneten Laschen (4 und 5) einer Rohrschelle,
- mit korrespondierenden Öffnungen (6 und 7) in den Laschen (4 und 5),
- mit einer die Öffnungen (6 und 7) durchdringenden und mit einer ersten (5) der zwei Laschen (4 und 5) axial zusammenwirkenden Gewindeschraube (8),
- mit einer zweiten (4) der zwei Laschen (4 und 5) axial zusammenwirkenden Gewindemutter (9), wobei die Gewindemutter (9) mit einer radialen Abflachung (11) in die Öffnung (6) ragt, die als Langloch (6) mit parallelen einander zugewandten Langlochflächen (12), deren Abstand der Schlüsselweite zwischen den Abflachungen (11) der Gewindemutter (9) entspricht, ausgebildet ist, und
- mit einer Angriffseinrichtung für ein Verdrehwerkzeug an der Gewindeschraube,
**dadurch gekennzeichnet,**
- **dass** die Gewindemutter (9) an ihrem der zweiten Lasche (4) zugewandten Ende die bis zu diesem Ende reichende radiale Abflachung (11) aufweist.

2. Verbindungsvorrichtung nach Anspruch 1,
**dadurch gekennzeichnet**
**dass** die Gewindemutter (9) für das axiale Zusammenwirken eine sich an der Außenfläche der zweiten Lasche (4) abstützende Abstufung (10) aufweist.

3. Verbindungsvorrichtung nach Anspruch 1 oder 2,
**dadurch gekennzeichnet**
**dass** der Beginn des Gewindes der Gewindebohrung (15) in der Gewindemutter (9) von der Seite der Gewindeschraube (8) her zurückgesetzt ist.

4. Verbindungsvorrichtung nach einem der vorhergehenden Ansprüche,
**dadurch gekennzeichnet,**
**dass** in beiden Laschen (4 und 5) die jeweilige Öffnung (6 und 7) als Langloch ausgebildet ist.

5. Verbindungsvorrichtung nach einem der vorhergehenden Ansprüche,
**dadurch gekennzeichnet,**
**dass** die Gewindemutter gegen axiales Herausfallen aus der Öffnung gesichert ist.

## Claims

1. A device for connecting two flange parts, particularly two assigned straps (4 and 5) of a pipe clamp,
- with corresponding openings (6 and 7) in the straps (4 and 5),
- with a screw bolt (8) that extends through the openings (6 and 7) and axially cooperates with a first (5) of the two straps (4 and 5),
- with a nut (9) that axially cooperates with a second (4) of the two straps (4 and 5), wherein the nut (9) protrudes into the opening (6) with a radial flat (11), and wherein said opening is realized in the form of an oblong hole (6) with parallel faces (12) that point toward one another and the distance between which corresponds to the wrench size across the flats (11) of the nut (9), and
- with a device on the screw bolt for attaching a rotary tool,
**characterized in**
- **that** the end of the nut (9) that faces the second strap (4) contains the radial flat (11) that extends up to this end.

2. The connecting device according to Claim 1,
**characterized in**
**that** the axial cooperation with the nut (9) is realized with a step (10) thereof that is supported on the outer surface of the second strap (4).

3. The connecting device according to Claim 1 or 2,
**characterized in**
**that** the beginning of the thread of the threaded bore (15) in the nut (9) is set back from the side of the screw bolt (8).

4. The connecting device according to one of the preceding claims,
**characterized in**
**that** the respective openings (6 and 7) in both straps (4 and 5) are realized in the form of oblong holes.

5. The connecting device according to one of the preceding claims,
**characterized in**
**that** the nut is secured from axially falling out of the opening.

## Revendications

1. Dispositif d'assemblage de deux pièces de bridage, notamment deux brides associées l'une à l'autre (4 et 5) d'un collier de tuyau,
- comportant des orifices correspondants (6 et 7) dans les brides (4 et 5),
- une vis filetée (8) traversant les orifices (6 et 7) et coopérant axialement avec une première (5) des deux brides (4 et 5),
- un écrou fileté (9) coopérant axialement avec la deuxième (4) des deux brides (4 et 5), l'écrou fileté (9) saillant par un méplat radial (11) dans l'orifice (6) qui est réalisé sous forme d'un trou oblong (12) ayant des surfaces de trou oblong (12) tournées l'une vers l'autre parallèlement, dont l'écartement équivaut au diamètre sur plats entre les méplats (11) de l'écrou fileté (9) et
- un dispositif de saisie pour un outil de torsion sur la vis filetée,
**caractérisé en ce que**
- l'écrou fileté (9) présente, à son extrémité tournée vers la deuxième bride (4), le méplat radial (11) allant jusqu'à cette extrémité.

2. Dispositif d'assemblage selon la revendication 1,
**caractérisé en ce que**
l'écrou fileté (9) comporte, pour la coopération axiale, un échelon (10) s'appuyant sur la surface extérieure de la deuxième bride (4).

3. Dispositif d'assemblage selon la revendication 1 ou 2,
**caractérisé en ce que**
le début du filetage de l'alésage fileté (15) de l'écrou fileté (9) est en retrait par rapport au côté de la vis filetée (8) .

4. Dispositif d'assemblage selon une des revendications précédentes,
**caractérisé en ce que**
l'orifice respectif (6 et 7) est réalisé sous forme de trou oblong dans les deux brides (4 et 5).

5. Dispositif d'assemblage selon une des revendications précédentes,
**caractérisé en ce que**
l'écrou fileté est bloqué pour éviter une chute axiale hors de l'orifice.
